# EUROPEAN PATENT SPECIFICATION

(11) **EP 1 394 790 B1**
(45) Date of publication and mention of the grant of the patent: **17.12.2008**
(21) Application number: 03255471.9
(22) Date of filing: 02.09.2003
(51) Int. Cl.: G11B 15/665, G11B 15/61

(54) **Pole base assembly**
Führungsstift-Basis-Vorrichtung
Dispositif à embase de tige de guidage

(30) Priority: 02.09.2002 KR 2002052623
(43) Date of publication of application: 03.03.2004
(73) Proprietor: SAMSUNG ELECTRONICS CO., LTD., Suwon-si, Gyeonggi-do 442-742 (KR)
(72) Inventor: Sim, Jae-hoon 102-1008 Dongsuwon LG Village, Suwon-si, Gyeonggi-do (KR); Choi, Hyeong-seok 205-1404, Hwanggol-maeul, Padal-gu Suwon-city, Gyunggi-do (KR); Park, Byeong-bae, Ansan-city, Gyunggi-do (KR)
(74) Representative: Geary, Stuart Lloyd

(56) References cited:
- EP-A- 0 127 447
- EP-A- 0 192 448
- EP-A- 0 613 132
- US-A1- 2002 085 306
- PATENT ABSTRACTS OF JAPAN vol. 017, no. 299 (P-1552), 8 June 1993 (1993-06-08) & JP 05 020750 A (SONY CORP), 29 January 1993 (1993-01-29)
- PATENT ABSTRACTS OF JAPAN vol. 014, no. 165 (P-1030), 30 March 1990 (1990-03-30) & JP 02 021452 A (MATSUSHITA ELECTRIC IND CO LTD), 24 January 1990 (1990-01-24)
- PATENT ABSTRACTS OF JAPAN vol. 014, no. 296 (P-1067), 26 June 1990 (1990-06-26) & JP 02 091846 A (MATSUSHITA ELECTRIC IND CO LTD), 30 March 1990 (1990-03-30)
- PATENT ABSTRACTS OF JAPAN vol. 018, no. 445 (P-1789), 18 August 1994 (1994-08-18) & JP 06 139661 A (CANON INC), 20 May 1994 (1994-05-20)
- PATENT ABSTRACTS OF JAPAN vol. 1997, no. 07, 31 July 1997 (1997-07-31) & JP 09 063159 A (SANYO ELECTRIC CO LTD), 7 March 1997 (1997-03-07)
- PATENT ABSTRACTS OF JAPAN vol. 008, no. 051 (P-259), 8 March 1984 (1984-03-08) & JP 58 200460 A (SANYO DENKI KK), 22 November 1983 (1983-11-22)

## Description

The present invention relates to a pole base assembly for a magnetic recording/reproducing apparatus having an inclined head drum, the assembly comprising a base and an inclined tape guiding pole mounted to the base.

A magnetic recording/reproducing apparatus, such as a VCR or a camcorder, typically comprises a main deck on which a head drum is rotatably disposed, a main sliding member movably disposed to slide laterally on the main deck, a sub-deck movably disposed to slide longitudinally on the main deck, a moving means for moving a cassette tape inserted into the sub-deck to a predetermined position on the main deck and a reel table for receiving the two tape reels of a tape cassette. The head drum is rotatably disposed on the main deck for recording and reproducing information on a tape. The apparatus further comprises a tape loading means for wrapping the tape around the head drum and tape guide devices.

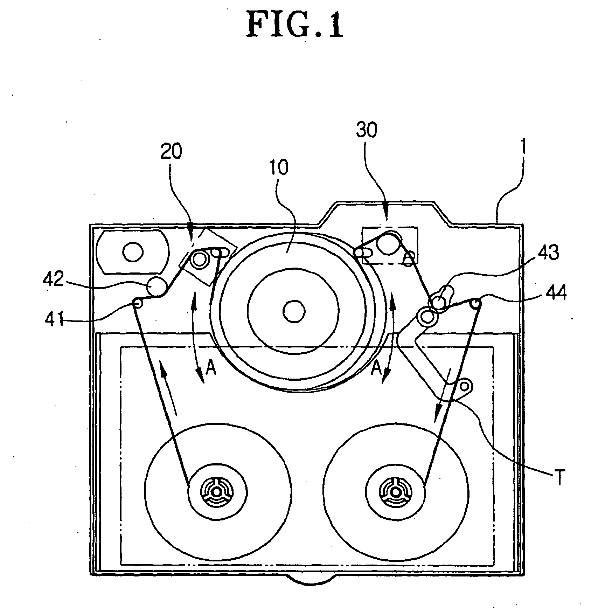

Figure 1 shows an example of tape guide means.

The tape guide means comprises an entrance pole base assembly 20 and an exit pole base assembly 30 for guiding the tape T around the head drum 10 and a first to fourth guideposts 41, 42, 43, 44. The first and second guideposts 41, 42 are fixed to the main deck 1 and the third and fourth guideposts 43, 44 move over the main deck 1 for guiding the tape T when it is being driven and to adjust tension the tension of the tape T.

The pole-base assemblies 20, 30 are moved along a direction A by a predetermined moving means to guide the driving of the tape T. Since the head drum 10 is disposed at a predetermined slope at the main deck 1, the pole-base assemblies 20, 30 have special construction for guiding the tape T inclined at a predetermined angle as the tape T is being guided along the head drum 10.

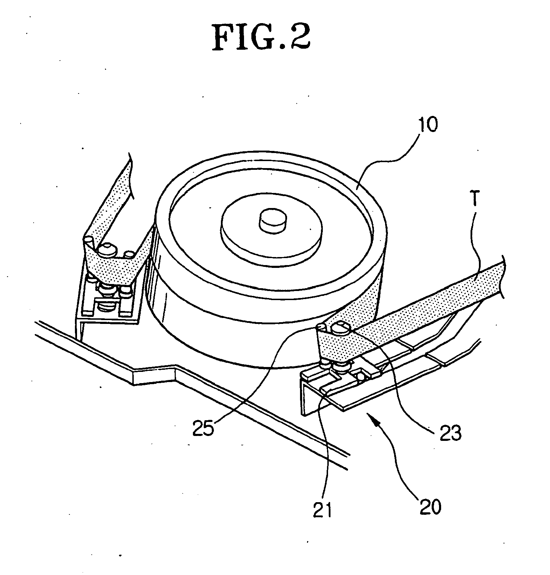

Referring to Figure 2, the entrance pole base assembly 20 comprises a pole base 21, a roller 23 and a sloping pole 25. The axis of the head drum 10 is inclined and the sloping pole 25 is also inclined so that the tape T can remain level where it is in contact with the head drum 10.

With the conventional pole base assembly, the pole base 21 is manufactured by a molding process and a hole for coupling the sloping pole 25 to it is bored and then the pole base 21 is press-fitted into the hole so that it is fixed with the correct inclination. In this case, the angle of the sloping pole 25 press-fit in the hole is determined by the initial position of the manufactured hole. Therefore, the angle of the sloping pole press-fit in the hole varies according to the manufacturing tolerance of the hole, thereby increasing the likelihood that the sloping pole will be sloped at an incorrect angle, and thus decreasing productivity.

JP05-020750 discloses a pole base assembly in which a sloping pole is fixed in a pole base, having a low supporting structure including a semi-circular cut-out for receiving the pole. It discloses the features of the preamble of claim 1.

EP0613132, JP09-063159 and EP0192448 disclose arrangements having a pole anchored in a hole bored in the pole base as discussed above.

JP02-021452 discloses a sloping pole which is anchored in a base by means of a smaller diameter peg which is inserted into a bored hole in the base. A stopper member is provided to prevent rotation of a cylindrical guide member.

JP06-139661 discloses a sloping pole in which a smaller diameter portion of the bottom of the pole fits into a hole in the base, the hole having a slightly raised surround.

EP0127447 discloses a sloping guide post which is fitted into a hole in a base. A guide member is provided having a recess opening to one side.

The present invention provides a pole base assembly for a magnetic recording/reproducing apparatus for guiding a tape drawn from a reel through a predetermined path toward a lead surface of a head drum, the pole base assembly comprising:
a pole base disposed to approach and retreat from a side of the head drum when the tape is loaded and unloaded, respectively;
a sloping pole, coupled to the pole base, having a length and being sloped at a sloping angle with respect to the pole base, for guiding the tape fed to the head drum at a predetermined angle, to be substantially parallel to the lead surface; and
a supporting holder, disposed on the pole base and configured to support the sloping pole at the sloping angle; wherein
the supporting holder comprises
a first supporting wall that has a sloping surface for supporting the sloping pole at the sloping angle, characterised in that the sloping surface has a length more than half the length of the sloping pole, and the supporting holder further comprises a second supporting wall that has a supporting surface for supporting the sloping pole, wherein the sloping surface and the supporting surface define an inclined V-shaped channel and the sloping pole rests in said channel, and in that the supporting holder has a lower height than the sloping pole in an inclined state.

Preferred features of the present invention are defined in claims 2 to 15 appended hereto.

According to the present invention, there is also provided a magnetic recording/reproducing apparatus having an inclined head drum and a pole base assembly according to the present invention.

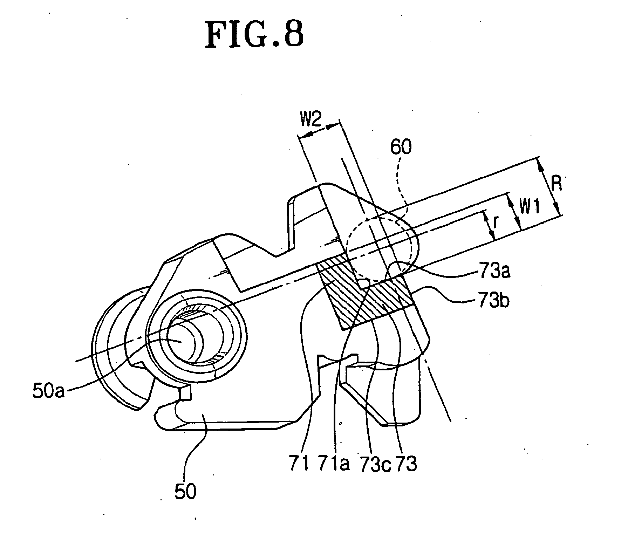

An embodiment of the present invention will now be described, by way of example, with reference to Figures 3 to 8 of the accompanying drawings, in which:
Figure 1 is a schematic plane view of a conventional magnetic recording/reproducing apparatus;
Figure 2 is a partial perspective view showing the important parts of Figure 1;
Figure 3 is a perspective view showing a pole base assembly for a magnetic recording/reproducing apparatus according to the invention;
Figure 4 is a cross-sectional view along a line I-I in Figure 3;
Figure 5 is a front view of the pole base assembly of Figure 3;
Figure 6 is a plan view of the pole base assembly of Figure 3;
Figure 7 is a sectional view taken on line II-II of Figure 6; and
Figure 8 is a plane view showing the pole base assembly of Figure 3 from another angle.

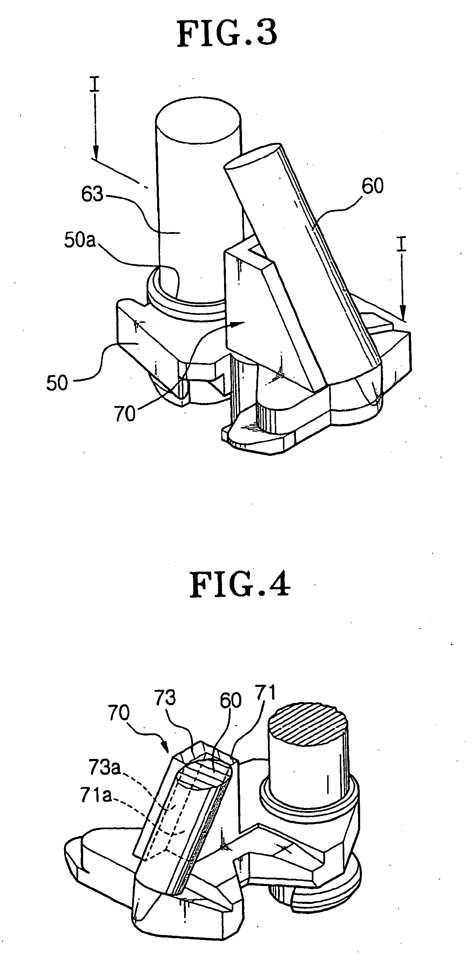

Referring to Figures 3 and 4, a pole base assembly for a magnetic recording/reproducing apparatus according to the invention comprises a pole base 50, a sloping pole 60 inclined at a predetermined angle on the pole base 50 and a supporting holder 70 on the pole base 50 for supporting the sloping pole 60 at the predetermined angle.

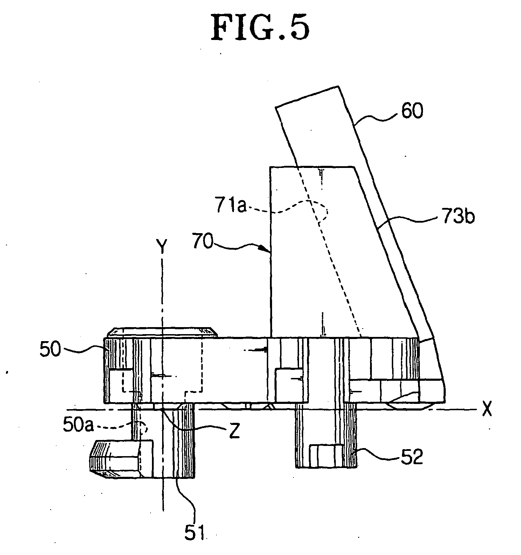

In loading and unloading of the tape cassette, the pole base 50 advances towards and retreats from the head drum along a guide rail that is provided on the deck. To this end, as shown in Figure 5, the pole base 50 includes a guide protrusion 51 which cooperates with the guide rail during the loading/unloading of the pole base 50 and a supporting boss 52 to which a link unit (not shown) is connected for loading/unloading of the pole base 50. The guide protrusion 51 and the supporting boss 52 protrude from the lower surface of the pole base 50 and are spaced apart from each other. The operation of the pole base 50 is conventional and, accordingly, further description thereof will be omitted.

A vertical pole 63 is also provided on the pole base 50 which cooperates with the sloping pole 60 for guiding the tape. The base of the vertical pole 63 is inserted into a supporting hole 50a formed in the pole base 50 and is perpendicular or substantially perpendicular to the upper surface of the pole base 50. The supporting hole 50a is formed through the centre of the guide protrusion 51. The vertical pole 63 may be held in the supporting hole 50a by a screw or press-fitted. The vertical pole 63 guides the running of the magnetic tape toward the head drum in advance of the guidance by the sloping pole 60.

As shown in Figure 2, because the head drum 10 is inclined, the sloping pole 60 is inclined so as to guide the tape level or substantially level as it passes around the head drum 10.

The supporting holder 70 is provided on the pole base 50. The supporting holder 70 includes a first supporting wall 71 that has a sloping surface 71a for supporting the sloping pole 60 at a predetermined angle and a second supporting wall 73 that has a supporting surface 73a in contact with the supporting wall 71 for supporting the sloping pole 60.

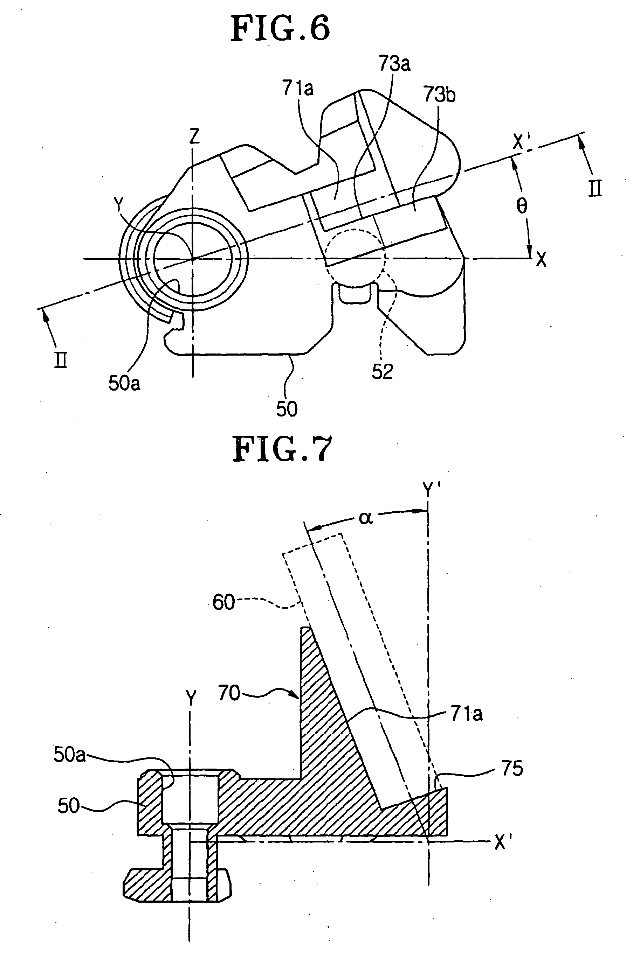

Referring now to Figures 5 and 6, the structure and position of the supporting holder 70 and the sloping pole 60 will be described with reference to a 3-dimensional coordinate system based on a first axis X extending from the centre of the supporting hole 50a to the centre of the supporting boss 52, a second axis Y extending in line with the centre of the supporting hole 50a, and a third axis Z extending in perpendicular to the first and the second axes X, Y.

In the 3-dimensional coordinate system, the base of the sloping pole 60 on a line at an angle *θ* with respect to the first axis X. The sloping pole 60 slopes at an angle α with respect to a line Y' parallel to the Y axis. To this end, the sloping surface 71a is aligned along a line at an angle θ to a line parallel to the X axis and slopes at an angle *α* to a line parallel to the Y axis. The values of θ and *α* are set according to the type of the head drum employed.

For the sake of increasing the support for the sloping pole 60, the first supporting wall 71 that has the sloping surface 71a is formed such that the same has a gradually increasing thickness from the upper end to the lower end. Also, the sloping surface 71a has a width w1 that is greater than the radius r, but smaller than the diameter R of the sloping pole 60. Accordingly, the sloping pole 60 is stably supported in contact with the sloping surface 71a. The sloping surface 71a has the uniform or substantially uniform width w1 along the length thereof, that is, in the direction parallel or substantially parallel with the sloping pole 60.

The sloping surface 71a is formed such that it is perpendicular to a plane connecting the second axis Y and a certain axis X' displaced from the first axis X by the angle *θ.*

The second supporting wall 73 has a supporting surface 73a for contacting and supporting the sloping pole 60 just as the sloping surface 71a of the first supporting wall 71 does. The supporting surface 73a forms 'V' in cross-section with the supporting surface 71a. For more stably supporting the sloping pole 60, the supporting surface 73a is formed at 90° or substantially 90° with respect to the sloping surface 71a. Accordingly, the supporting surface 71a crosses the plane of the first and the third axes X, Z in a perpendicular relation. Just like the sloping surface 71a of the first supporting wall 71, the supporting surface 73a has a width w2 that is greater than the radius r, but smaller than the diameter R of the sloping pole 60. The supporting surface 73a also has the uniform width w2 in the parallel direction with respect to the sloping pole 60.

The second supporting wall 73 has a subsidiary sloping surface 73b which is in parallel or substantially parallel relation with respect to the sloping surface 71a. As the width w2 of the supporting surface 71a of the subsidiary sloping surface 73b is uniform, the sloping pole 60 is provided with a slope of α. By providing the subsidiary sloping surface 73b, interference of the tape in the supporting holder 70 can be avoided while the tape is guided by the sloping pole 60 supported on the supporting holder 70. The second supporting wall 73 has a predetermined thickness, that is, a predetermined length between the supporting surface 73a and the outer surface 73c opposite to the supporting surface 73a.

Because the sloping pole 60 is supported on two sides, that is by the sloping surface 71 and the supporting surface 73a, the position and posture thereof are determined automatically. The supporting holder 70 further includes a bottom surface 75 on which the sloping pole 60 is seated. The bottom surface 75 corresponds to the upper surface of the pole base 50, and is provided at a predetermined angle, and preferably at 90°, with respect to the sloping surface 71a. Accordingly, the sloping pole 60 is fixed in position by the close contact with the sloping surface 71a, the bottom surface 75 and the supporting surface 73a. The sloping pole 60 is secured onto the supporting holder 70 by an adhesive. Preferably, adhesive is first applied to the sloping surface 71a, the supporting surface 73a and the bottom surface 75, and then the sloping pole 60 is positioned thereon.

It is also preferable to form the supporting holder 70 at a lower height than the sloping pole 60 in an inclined state so that there is no interference. However, the supporting holder 70, that is, the sloping surface 71a may preferably have a length more than a half of the length of the sloping pole 60 so as to secure stable supporting force of the sloping pole 60.

The supporting holder 70 constructed as above may preferably be formed integrally with the pole base 50. This is because, by integrally forming the supporting holder 70 with the pole base 50 through a metal mold or an injection molding, allowances between the sloping surface 71a, the supporting surface 73a and the bottom surface 75 can be maximized.

With the pole base assembly described above, the sloping pole 60 is supported at a predetermined slope by forming the supporting holder 70 integrally with the pole base 50. Because the position and the posture of the sloping pole 60 are determined by the sloping surface 71a, the supporting surface 73a and the bottom surface 75, assembly can be easily completed without having to use a separate jig or inspection equipment, but simply by bonding the sloping pole 60 onto the supporting holder 70.

Because the sloping pole 60 can he assembled onto the pole base 50 in a desired position and posture, productivity increases, while the defect rate decreases.

Further, by designing the sloping surface 71a, the supporting surface 73a and the bottom surface 75 of the supporting holder 70 based on the 3-dimensional coordinate system that uses the supporting hole 50a and the supporting boss 52 provided to the pole base 50, appropriate design in respect to sizes and dimensions of each part is enabled, and alteration in design becomes easier.

With the pole base assembly of the magnetic recording/reproducing apparatus according to the embodiments of the present invention described above, while the sloping pole is assembled on the sloping surface which is provided on the pole base in advance, the inclination of the sloping pole is automatically determined by the sloping surface. As a result, defect rate decreases and productivity increases.

## Claims

1. A pole base assembly for a magnetic recording/reproducing apparatus for guiding a tape (T) drawn from a reel through a predetermined path toward a lead surface of a head drum (10), the pole base assembly comprising:
a pole base (50) disposed to approach and retreat from a side of the head drum (10) when the tape (T) is loaded and unloaded, respectively;
a sloping pole (60), coupled to the pole base (50), having a length and being sloped at a sloping angle (α) with respect to the pole base (50), for guiding the tape fed to the head drum (10) at a predetermined angle, to be substantially parallel to the lead surface; and
a supporting holder (70), disposed on the pole base (50) and configured to support the sloping pole at the sloping angle (α); wherein the supporting holder (70) comprises a first supporting wall (71) that has a sloping surface (71a) for supporting the sloping pole (60) at the sloping angle, **characterised in that** the sloping surface (71a) has a length more than half the length of the sloping pole (60), and the supporting holder (70) further comprises a second supporting wall (73) that has a supporting surface (73a) for supporting the sloping pole, wherein the sloping surface (71a) and the supporting surface (73a) define an inclined V-shaped channel and the sloping pole (60) rests in said channel, and **in that** the supporting holder (70) has a lower height than the sloping pole (60) in an inclined state.

2. A pole base assembly as claimed in claim 1, wherein:
the first supporting wall (71) has a gradually increasing thickness from an upper end to a lower end.

3. A pole base assembly as claimed in claim 1 or 2, wherein:
the sloping surface (71a) has a width (W1) that is greater than a radius (r) of the sloping pole (60) and smaller than a diameter (R) of the sloping pole (60).

4. A pole base assembly as claimed in any one of the preceding claims, wherein:
the sloping surface (71a) has a width (W1) that is substantially uniform along the length of the sloping surface (71a).

5. A pole base assembly as claimed in any one of the preceding claims, wherein:
the supporting surface is formed at substantially 90° with respect to the sloping surface (71 a).

6. A pole base assembly as claimed in any one of the preceding claims, wherein:
the supporting surface (73a) has a width (W2) that is greater than a radius (r) of the sloping pole (60) and smaller than a diameter (R) of the sloping pole (60).

7. A pole base assembly as claimed in any one of the preceding claims, wherein:
the supporting surface (73a) has a substantially uniform width (W2).

8. A pole base assembly as claimed in any one of the preceding claims, wherein:
the second supporting wall (73) has a sub-sloping surface (73b) which is in substantially parallel relation with respect to the sloping surface (71a).

9. A pole base assembly as claimed in any one of the preceding claims, wherein:
the supporting holder (70) includes a bottom surface (75) which is adapted to contact and support a lower end of the sloping pole (60), and extends at substantially 90° with respect to the sloping surface (71a)

10. A pole base assembly as claimed in any one of the preceding claims, wherein:
the pole base (50) has a supporting hole (50a) therein and a supporting boss (52) spaced from the supporting hole (50a), such that a first axis X extends from the center of the supporting hole (50a) to the center of the supporting boss (52), a second axis Y extends in line with the center of the supporting hole (50a), and a third axis Z extends in a perpendicular relation with respect to the first axis X and the second axis Y.

11. A pole base assembly as claimed in claim 10, wherein:
the sloping pole (60) is located at a direction angle θ with respect to the first axis X.

12. A pole base assembly as claimed in claim 10 or 11, wherein:
the sloping pole (60) is disposed on the pole base (50) to have a predetermined slope α with respect to another imaginary axis Y' which is in parallel with the second axis Y.

13. A pole base assembly as claimed in any one of the preceding claims, wherein:
the sloping pole (60) is bonded to the supporting holder (70) with adhesive.

14. A pole base assembly as claimed in any one of the preceding claims, wherein:
the supporting holder (70) is formed integral with the pole base (50).

15. A magnetic recording/reproducing apparatus having an inclined head drum, and a pole base assembly according to any one of the preceding claims.

## Patentansprüche

1. Schaft-Basis-Anordnung für eine magnetische Aufnahme/Wiedergabe-Vorrichtung zum Führen eines Bandes (T), das von einer Bandrolle durch einen vorbestimmten Pfad in Richtung einer Leitfläche einer Kopftrommel (10) gezogen ist, wobei die Schaft-Basis-Anordnung umfasst:
eine Schaft-Basis (50), die dazu ausgelegt ist, von einer Seite der Kopftrommel (10) heranzurücken und zurückzurücken, wenn das Band (T) geladen bzw. entladen wird;
einen Schrägschaft (60), der an die Schaft-Basis (50) gekoppelt ist, der eine Länge hat und der mit Bezug zur Schaft-Basis (50) in einem Schrägwinkel (α) schräggestellt ist, zum Führen des Bandes, das an die Kopftrommel (10) in einem vorbestimmten Winkel zugeführt wird, um im Wesentlichen parallel zur Leitfläche zu sein; und
einen Unterstützungshalter (70), der an der Schaft-Basis (50) angeordnet ist und der dazu ausgelegt ist, den Schrägschaft in dem Schrägwinkel (α) zu unterstützen; wobei
der Unterstützungshalter (70) eine erste Unterstützungswand (71) umfasst, die eine Schrägfläche (71 a) zum Unterstützen des Schrägschaftes (60) in dem Schrägwinkel hat; **dadurch gekennzeichnet, dass**
die Schrägfläche (71 a) eine Länge hat, die mehr als die Hälfte der Länge des Schrägschaftes (60) ist, und der Unterstützungshalter (70) ferner eine zweite Unterstützungswand (73) umfasst, die eine Unterstützungsfläche (73a) zum Unterstützen des Schrägschaftes hat, wobei die Schrägfläche (71 a) und die Unterstützungsfläche (73a) einen geneigten, V-förmigen Kanal definieren, und wobei der Schrägschaft (60) in dem Kanal ruht, und dadurch, dass der Unterstützungshalter (70) eine geringere Höhe als der Schrägschaft (60) in einem geneigten Zustand hat.

2. Schaft-Basis-Anordnung nach Anspruch 1, wobei
die erste Unterstützungswand (71) eine sich allmählich vergrößernde Dicke von einem oberen Ende zu einem unteren Ende hat.

3. Schaft-Basis-Anordnung nach Anspruch 1 oder 2, wobei
die Schrägfläche (71a) eine Breite (W1) hat, die größer als ein Radius (r) des Schrägschaftes (60) und kleiner als ein Durchmesser (R) des Schrägschaftes (60) ist.

4. Schaft-Basis-Anordnung nach einem der vorhergehenden Ansprüche, wobei
die Schrägfläche (71a) eine Breite (W1) hat, die im Wesentlichen einheitlich entlang der Länge der Schrägfläche (71 a) ist.

5. Schaft-Basis-Anordnung nach einem der vorhergehenden Ansprüche, wobei
die Unterstützungsfläche mit Bezug auf die Schrägfläche (71 a) im Wesentlichen unter 90° gebildet ist.

6. Schaft-Basis-Anordnung nach einem der vorhergehenden Ansprüche, wobei
die Unterstützungsfläche (73a) eine Breite (W2) hat, die größer als ein Radius (r) des Schrägschaftes (60) und kleiner als ein Durchmesser (R) des Schrägschaftes (60) ist.

7. Schaft-Basis-Anordnung nach einem der vorhergehenden Ansprüche, wobei
die Unterstützungsfläche (73a) eine im Wesentlichen einheitliche Breite (W2) hat.

8. Schaft-Basis-Anordnung nach einem der vorhergehenden Ansprüche, wobei
die zweite Unterstützungswand (73) eine Teilschrägfläche (73b) hat, welche mit Bezug auf die Schrägfläche (71a) im Wesentlichen in paralleler Beziehung ist.

9. Schaft-Basis-Anordnung nach einem der vorhergehenden Ansprüche, wobei
der Unterstützungshalter (70) eine Bodenfläche (75) aufweist, die dazu ausgelegt ist, ein unteres Ende des Schrägschaftes (60) zu berühren und zu unterstützen, und die sich mit Bezug auf die Schrägfläche (71 a) im Wesentlichen unter 90° erstreckt.

10. Schaft-Basis-Anordnung nach einem der vorhergehenden Ansprüche, wobei
die Schaft-Basis (50) eine Unterstützungsöffnung (50a) darin und einen Unterstützungsansatz (52) hat, der so von der Unterstützungsöffnung (50a) beabstandet ist, dass sich eine erste Achse X aus der Mitte der Unterstützungsöffnung (50a) zur Mitte des Unterstützungsansatzes (52) erstreckt, sich eine zweite Achse Y in Übereinstimmung mit der Mitte der Unterstützungsöffnung (50a) erstreckt, und sich eine dritte Achse Z mit Bezug zur ersten Achse X und zweiten Achse Y in einer orthogonalen Beziehung erstreckt.

11. Schaft-Basis-Anordnung nach Anspruch 10, wobei
sich der Schrägschaft (60) mit Bezug auf die erste Achse X in einem Richtungswinkel θ befindet.

12. Schaft-Basis-Anordnung nach Anspruch 10 oder 11, wobei
der Schrägschaft (60) an der Schaft-Basis (50) derart angeordnet ist, dass er mit Bezug auf eine andere imaginäre Achse Y', die zur zweiten Achse Y parallel ist, eine vorbestimmte Neigung α hat.

13. Schaft-Basis-Anordnung nach einem der vorhergehenden Ansprüche, wobei
der Schrägschaft (60) an dem Unterstützungshalter (70) mit einem Haftmittel gebunden ist.

14. Schaft-Basis-Anordnung nach einem der vorhergehenden Ansprüche, wobei
der Unterstützungshalter (70) mit der Schaft-Basis (50) integral gebildet ist.

15. Magnetische Aufnahme/Wiedergabe-Vorrichtung, aufweisend eine geneigte Kopftrommel und eine Schaft-Basis-Anordnung nach einem der vorhergehenden Ansprüche.

## Revendications

1. Ensemble de base de montant pour un appareil d'enregistrement/reproduction magnétique pour guider une bande (T) tirée d'une bobine à travers un chemin prédéterminé vers une surface conductrice d'un tambour de tête (10), l'ensemble de base de montant comprenant :
une base de montant (50) disposée pour l'approche et le retrait d'un côté du tambour de tête (10) lorsque la bande (T) est respectivement chargée et déchargée ;
un montant d'inclinaison (60), couplé à la base de montant (50), ayant une longueur et étant incliné à un angle d'inclinaison (α) par rapport à la base de montant (50), pour guider la bande alimentée dans le tambour de tête (10) à un angle prédéterminé, pour être sensiblement parallèle à la surface conductrice ; et
un support de soutien (70), disposé sur la base de montant (50) et configuré pour soutenir le montant d'inclinaison à l'angle d'inclinaison (α) ; dans lequel le support de soutien (70) comprend une première paroi de soutien (71) qui a une surface d'inclinaison (71a) pour soutenir le montant d'inclinaison (60) à l'angle d'inclinaison, **caractérisé en ce que** la surface d'inclinaison (71a) a une longueur égale à plus de la moitié de la longueur du montant d'inclinaison (60), et le support de soutien (70) comprend en outre une deuxième paroi de soutien (73) qui a une surface de soutien (73a) pour soutenir le montant d'inclinaison, dans lequel la surface d'inclinaison (71a) et la surface de soutien (73a) définissent un canal en forme de V incliné et le montant d'inclinaison (60) repose dans ledit canal, et **en ce que** le support de soutien (70) a une hauteur inférieure au montant d'inclinaison (60) dans un état incliné.

2. Ensemble de base de montant selon la revendication 1, dans lequel :
la première paroi de soutien (71) a une épaisseur progressivement croissante d'une extrémité supérieure à une extrémité inférieure.

3. Ensemble de base de montant selon la revendication 1 ou 2, dans lequel :
la surface d'inclinaison (71a) a une largeur (W1) qui est supérieure à un rayon (r) du montant d'inclinaison (60) et inférieure à un diamètre (R) du montant d'inclinaison (60).

4. Ensemble de base de montant selon l'une quelconque des revendications précédentes, dans lequel :
la surface d'inclinaison (71a) a une largeur (W1) qui est sensiblement uniforme le long de la longueur de la surface d'inclinaison (71a).

5. Ensemble de base de montant selon l'une quelconque des revendications précédentes, dans lequel :
la surface de soutien est formée à sensiblement 90° par rapport à la surface d'inclinaison (71a).

6. Ensemble de base de montant selon l'une quelconque des revendications précédentes, dans lequel :
la surface de soutien (73a) a une largeur (W2) qui est supérieure à un rayon (r) du montant d'inclinaison (60) et inférieure à un diamètre (R) du montant d'inclinaison (60).

7. Ensemble de base de montant selon l'une quelconque des revendications précédentes, dans lequel :
la surface de soutien (73a) a une largeur sensiblement uniforme (W2).

8. Ensemble de base de montant selon l'une quelconque des revendications précédentes, dans lequel :
la deuxième paroi de soutien (73) a une surface de sous-inclinaison (73b) qui est en relation sensiblement parallèle par rapport à la surface d'inclinaison (71a).

9. Ensemble de base de montant selon l'une quelconque des revendications précédentes, dans lequel :
le support de soutien (70) comprend une surface inférieure (75) qui est adaptée pour entrer en contact et soutenir une extrémité inférieure du montant d'inclinaison (60), et s'étend à sensiblement 90° par rapport à la surface d'inclinaison (71a).

10. Ensemble de base de montant selon l'une quelconque des revendications précédentes, dans lequel :
la base de montant (50) a un trou de soutien (50a) à l'intérieur de celle-ci et une bosse de soutien (52) espacée du trou de soutien (50a), de sorte qu'un premier axe X s'étend du centre du trou de soutien (50a) au centre de la bosse de soutien (52), un deuxième axe Y s'étend en ligne avec le centre du trou de soutien (50a), et un troisième axe Z s'étend dans une relation perpendiculaire par rapport au premier axe X et au deuxième axe Y.

11. Ensemble de base de montant selon la revendication 10, dans lequel :
le montant d'inclinaison (60) est situé à un angle de direction de θ par rapport au premier axe X.

12. Ensemble de base de montant selon la revendication 10 ou 11, dans lequel :
le montant d'inclinaison (60) est disposé sur la base de montant (50) pour avoir une inclinaison prédéterminée α par rapport à un autre axe imaginaire Y' qui est parallèle au deuxième axe Y.

13. Ensemble de base de montant selon l'une quelconque des revendications précédentes, dans lequel :
le montant d'inclinaison (60) est lié au support de soutien (70) par adhésif.

14. Ensemble de base de montant selon l'une quelconque des revendications précédentes, dans lequel :
le support de soutien (70) fait partie intégrante de la base de montant (50).

15. Appareil d'enregistrement/reproduction magnétique ayant un tambour de tête incliné et un ensemble de base de montant selon l'une quelconque des revendications précédentes.
